# EUROPÄISCHE PATENTANMELDUNG

(11) **EP 3 843 011 A1**
(43) Veröffentlichungstag der Anmeldung: **30.06.2021**
(21) Anmeldenummer: 20176326.5
(22) Anmeldetag: 25.05.2020
(51) Int. Cl.: G06N 3/04, G06N 3/08

(54) **SYSTEM UND VERFAHREN ZUR QUALITÄTSZUSICHERUNG VON DATENBASIERTEN MODELLEN**

(30) Priorität: 23.12.2019 EP 19219525
(71) Anmelder: Aicura Medical GmbH, 12103 Berlin (DE)
(72) Erfinder: NIEHAUS, Sebastian, 21614 Buxtehude (DE); DIEBOLD, Michael, 14165 Berlin (DE); REICHELT, Janis, 04275 Leipzig (DE); LICHTERFELD, Daniel, 12207 Berlin (DE)
(74) Vertreter: Eisenführ Speiser

(57) **Zusammenfassung**

Die Erfindung betrifft ein System, das zum einen einen Klassifikator aufweist, der von einem diskriminativen neuronalen Netz gebildet ist und der ein binäres Klassenmodell oder ein Mehrklassenmodel verwirklicht. Zum anderen weist das System einen Generator auf, der von einem generativen neuronalen Netz gebildet ist. Sowohl der Klassifikator als auch der Generator sind - für eine entsprechende Klasse - mit den gleichen Trainingsdatensätzen trainiert und verkörpern daher einander entsprechende Modelle für diese Klasse.

Die Erfindung betrifft auch ein Verfahren zum Ermitteln eines Gütekriteriums für Eingangsdatensätze für einen Klassifikator mit einem diskriminativen neuronalen Netzwerk. Der Klassifikator ist mit Trainingsdatensätzen trainiert und verkörpert ein Klassifikationsmodell für eine Klasse.

Gemäß dem Verfahren wird zunächst ein Generator mit einem generativen neuronalen Netzwerk bereitgestellt und mit denselben Trainingsdatensätzen trainiert, mit denen der Klassifikator trainiert wurde.

Anschließend wird mittels des trainierten Generators und einem auf zufälligen Werten basierenden Eingangsdatensatz ein künstlicher Datensatz generiert, der für das von dem Klassifikator verkörperten Klassifikationsmodell repräsentativ ist.

Aus dem künstlichen Datensatz werden dann Werte für durch diesen künstlichen Datensatz repräsentierte technische Parameter ermittelt.

Schließlich wird aus den ermittelten Werten der technischen Parameter ein Gütekriterium gebildet, indem aus den ermittelten Werten der technischen Parameter ein Werteraum oder Wertebereich bestimmt wird, der von den ermittelten Werten der technischen Parameter und einen vorgegebenen Toleranzbereich abhängt.

## Beschreibung

Die Erfindung betrifft ein System und ein Verfahren zur Qualitätszusicherung von datenbasierten Modellen.

Die Erfindung betrifft insbesondere ein System und ein Verfahren zur Qualitätszusicherung von Klassifikatoren oder Regressoren, die von diskriminativen neuronalen Netzen gebildet sind, wobei die Klassifikatoren dazu dienen, die Zugehörigkeit oder Nichtzugehörigkeit von durch einen jeweiligen Eingangsdatensatz repräsentierten Objekten, Zuständen oder Ereignissen zu einer Klasse oder einer von mehreren Klassen anzugeben. Regressoren geben hingegen einen Zahlenwert aus, z.B. eine Altersangabe zu einer Person, wenn der Regressor ein Bild einer Person verarbeitet.

Bekannt sind beispielsweise binäre Klassifikatoreinheiten, die für ein durch einen jeweiligen Datensatz repräsentiertes Objekt, Ereignis oder einen Zustand die Zugehörigkeit oder Nichtzugehörigkeit dieses Objekts, dieses Zustands oder dieses Ereignisses zu einer Klasse angeben, für die die binäre Klassifikatoreinheit trainiert ist.

Ein Eingangsdatensatz ist typischerweise ein Vektor oder eine Matrix. Falls ein Objekt beispielsweise durch einen Vektor repräsentiert ist, enthält der Vektor Werte, die bestimmte Eigenschaften des Objekts beschreiben, also beispielsweise einen Wert für die Eigenschaft Gewicht, einen Wert für die Eigenschaft Größe und einen Wert für die Eigenschaft Geschlecht. Ein entsprechender Vektor könnte für eine 1,90 m große, 100 kg schwere, männliche Person beispielsweise wie folgt aussehen: (2,190,100). In diesem Vektor stehen beispielsweise 2 für das Geschlecht (1 = weiblich, 2 = männlich), 190 für die Körpergröße von 190 cm und 100 für das Körpergewicht, nämlich 100 kg.

Ein neuronales Netz ist typischerweise so aufgebaut, dass für jeden Wert ein Eingangsknoten vorhanden ist, in dem genannten Beispiel also drei Eingangsknoten, von denen ein Eingangsknoten für das Geschlecht, ein zweiter Eingangsknoten für die Körpergröße und ein dritter Eingangsknoten für das Gewicht vorgesehen ist. Letzteres gilt allerdings nicht für sogenannte LSTM neuronale Netze (LSTM: long short-term memory).

Die in einem Eingangsdatensatz enthaltenen Werte werden den (Eingangs-) Knoten der Eingangsschicht zugeordnet. Die Eingangsknoten liefern ihre Ausgangswerte als Eingangswerte an typischerweise mehrere (oder alle) Knoten der nächsten Schicht des künstlichen neuronalen Netzwerks. Ein (Ausgangs-) Knoten in einer Ausgangsschicht des künstlichen neuronalen Netzwerks liefert schließlich den Zugehörigkeitswert, der angibt, mit welcher Wahrscheinlichkeit (oder ob) ein durch den Eingangsdatensatz repräsentiertes Objekt, Ereignis oder Zustand zu einer bestimmten Klasse gehört. Typischerweise sind zwischen Eingangsschicht und Ausgangsschicht mehrere Zwischenschichten (hidden layers) vorgesehen, die zusammen mit der Eingangsschicht und der Ausgangschicht die Topologie des neuronalen Netzes definieren. Ein binärer Klassifikator kann in der Ausgangsschicht zwei Knoten aufweisen, nämlich einen, dass den Zugehörigkeitswert für die Klasse A und einen, der den Zugehörigkeitswert für die Klasse Nicht-A als Ausgangswert liefert. Ein Multiklassen-Klassifikator kann in der Ausgangsschicht mehrere Knoten aufweisen, nämlich jeweils einen, der einen Zugehörigkeitswert für eine der Klassen liefert, für die der Multiklassen-Klassifikator trainiert wurde, und einen weiteren Knoten, der die Wahrscheinlichkeit anzeigt, dass das durch den Eingangsdatensatz repräsentierte Objekt oder der durch den Eingangsdatensatz repräsentierte Zustand keiner der Klassen zuzuordnen ist, für die der Multiklassen-Klassifikator trainiert wurde. Ein Multiklassen-Klassifikator kann aus mehreren binären Teilklassifikationsmodellen derart gebildet sein, dass der Multiklassen-Klassifikator sich aus mehreren parallelen binären Teilklassifikationsmodellen (die binäre Teilpfade bilden) mit jeweils eigenen Zwischenschichten (hidden layers) zusammensetzt, wobei die mehreren parallelen binären Klassifikationsmodelle eine gemeinsame Eingangsschicht und eine gemeinsame Ausgangsschicht aufweisen.

In typischen künstlichen neuronalen Netzen folgen somit auf eine Eingangsschicht mit ihren Eingangsknoten mehrere weitere Schichten (hidden layer) mit Knoten. Dabei ist typischerweise jeder Knoten einer nächstfolgenden Schicht mit sämtlichen Knoten der vorangehenden Schicht verknüpft und kann auf diese Weise die jeweiligen Ausgangswerte der Knoten der vorangehenden Schicht empfangen. Die so empfangenen Werte werden in einem jeweiligen Knoten typischerweise gewichtet aussummiert, um dann aus der gewichteten Summe beispielsweise über eine Sigmoid Funktion oder eine andere Funktion einen Ausgangswert des jeweiligen Knotens zu bilden, der dann an sämtliche Knoten der nächstfolgenden Schicht ausgegeben wird. Die Anzahl der Schichten und Knoten ergeben die Topologie eines neuronalen Netzes. Die Funktion, mit der ein jeweiliger Knoten die typischerweise verschiedenen Eingangswerte von den Knoten der vorangehenden Schicht gewichtet und zu einem Ausgangswert verarbeitet, macht die Parametrisierung des künstlichen neuronalen Netzes aus und definiert ein Modell, z.B. ein Klassifikationsmodell.

Wie grundsätzlich bekannt ist, entstehen die einzelnen Gewichte im Laufe einer Trainingsphase für ein jeweiliges künstliches neuronales Netz. In einer derartigen Trainingsphase werden dem künstlichen neuronalen Netz Trainingsdatensätze als Eingangsdatensätze zur Verfügung gestellt und typischerweise auch die zu einem jeweiligen Trainingsdatensatz (feature) gehörende Klasse (label oder target genannt). Während der Trainingsphase wird regelmäßig die Abweichung des Ausgangswertes der Knoten an einer Ausgangsschicht des neuronalen Netzes mit dem erwarteten Wert verglichen.

Ein künstliches neuronales Netz, das ein binäres Klassifikationsmodell (einen binären Klassifikator) repräsentiert, hat beispielsweise in der Ausgangsschicht genau zwei Knoten, von denen ein Knoten im Ergebnis einen Zugehörigkeitswert liefert, der die Wahrscheinlichkeit wiedergeben soll, dass der Eingangsdatensatz zu einer bestimmten Klasse gehört, während der andere Knoten einen Zugehörigkeitswert liefert, der die Wahrscheinlichkeit angibt, dass der Eingangsdatensatz nicht zu dieser Klasse gehört. Die Zugehörigkeitswerte müssen nicht notwendigerweise eindeutig sein, sondern geben vielmehr eine Wahrscheinlichkeit dafür an, dass beispielsweise das durch den Eingangsdatensatz repräsentierte Objekt zur Klasse A oder nicht zur Klasse A gehört. Ein möglicher Zugehörigkeitswert kann also z. B. 0.78 sein und bedeuten, dass das Objekt mit 78 % Wahrscheinlichkeit zur Klasse A und mit 22 % Wahrscheinlichkeit nicht zur Klasse A gehört.

In der Trainings- oder Lernphase für ein künstliches neuronales Netz wird die Differenz zwischen dem erwarteten Ausgangswerten des künstlichen neuronalen Netzes und den tatsächlichen Ausgangswerten des künstlichen neuronalen Netzes bestimmt und auf Basis dieses durch eine Differenz gegebenen Fehlers die Gewichte aller Knoten und Knoteneingänge solange iterativ verändert, bis die an der Ausgangsschicht des künstlichen neuronalen Netzes erhaltenen Werte in etwa den erwarteten Werten entsprechen. Dabei erfolgt die schrittweise Adaption der Gewichte sozusagen rückwärts ausgehend von der Ausgangsschicht durch alle vorangehenden Schichten bis hin zur Eingangsschicht. In der Lernphase werden die Gewichte in einem iterativen Prozess somit schrittweise optimiert, und zwar derart, dass die Abweichung zwischen einem vorgegebenen Zielwert (d.h. einer vorgegeben Klasse, auch label oder target genannt) und dem Ausgangswert des Klassifikators so gering wie möglich ist. Die Abweichung zwischen dem vorgegebenen Zielwert und dem Ausgangswert des Klassifikators kann mittels eines Gütekriteriums bewertet werden und die Optimierung der Gewichte kann mittels eines Gradientenalgorithmus erfolgen, bei dem ein typischerweise quadratisches Gütekriterium optimiert wird, d.h. nach Minima des Gütekriteriums gesucht wird. Die Annäherung an ein Minimum erfolgt dabei mit Hilfe eines bekannten Gradientenalgorithmus, bei dem die Gradienten bestimmt werden, mit denen sich die Gewichte von Iterationsschritt zu Iterationsschritt verändern. Größere Gradienten entsprechen hierbei einer größeren Veränderung pro Iterationsschritt und kleine Gradienten einer kleineren Veränderung pro Iterationsschritt. In der Nähe eines gesuchten (lokalen) Minimums des Gütekriteriums sind die Veränderungen der Gewichte von Iterationsschritt zu Iterationsschritt - und damit der entsprechende Gradient - typischerweise relativ klein. Mit Hilfe der Gradienten können jeweils veränderte Gewichte für den nächsten Iterationsschritt bestimmt werden. Die iterative Optimierung wird solange fortgesetzt, bis ein vorgegebenes Abbruchkriterium erfüllt ist, z.B. das Gütekriterium ein vorgegebenes Maß erreicht hat oder eine vorgegebene Anzahl von Iterationsschritten erreicht ist.

Da sich die Werte in den Eingangsdatensätzen für verschiedene Zustände oder Objekte der gleichen Klasse unterscheiden können, wird ein Klassifikator mit vielen, mehr oder weniger unterschiedlichen Eingangsdatensätzen als Trainingsdatensätzen für eine jeweilige Klasse trainiert und die Modellparameterwerte werden im Verlauf des Optimierungsprozesses so bestimmt, dass sie trotz abweichender Eingangsdatensätze einen möglich zuverlässigen Zugehörigkeitswert für eine jeweilige Klasse liefern. Wenn beispielsweise eine vorgegebene Klasse für ein Objekt "Rose" ist, und die Werte des Eingangsdatensatzes die Pixel eines Fotos - nämlich Farbe und Helligkeit eines jeweiligen Bildpunktes des Fotos - repräsentieren, kommt es offensichtlich auf die Farbe der Blütenblätter der Rose weniger an als beispielweise auf deren Form, um das auf dem Foto abgebildete Objekt der Klasse "Rose" zuzuordnen. Das Training eines entsprechenden Klassifikators mit vielen unterschiedlichen Fotos von Rosen führt also absehbar dazu, dass von der Farbe der Blütenblätter abhängige Werte der Eingangsdatensätze im Ergebnis weniger stark gewichtet werden, als von der Form der Blütenblätter abhängige Werte der Eingangsdatensätze, was zu entsprechend angepassten Modellparameterwerten, insb. Gewichten für die verschiedenen Eingangswerte der Knoten, führt.

Die Zuverlässigkeit, mit der ein derartiges künstliches neuronales Netz als Klassifikator durch Eingangsdatensätze repräsentierte Objekte, Ereignisse oder Zustände einer oder mehrerer Klassen zuordnen kann, hängt somit entscheidend von den Eingangsdatensätzen ab, die als Trainingsdatensätze in der Trainingsphase des künstlichen neuronalen Netzes verwendet wurden.

Entsprechendes gilt auch dann, wenn die Eingangsdatensätze keine Vektoren, sondern beispielsweise Matrizen sind, die beispielsweise aufgenommene Bilder repräsentieren können. Derartige Matrizen, also beispielsweise Bilder, werden typischerweise mit Hilfe von faltenden künstlichen neuronalen Netzen verarbeitet (Convolutional Neural Networks; CNN) bei denen die Dimensionen der Eingangsmatrix mit Hilfe von Faltungsschichten (convolution layers) schrittweise reduziert wird, indem eine jeweilige Eingangsmatrix (auf der Eingangsebene wie auch auf nachfolgenden Ebenen) mit Hilfe von kleineren, als Filtern dienenden Faltungsmatrizen (beispielsweise 3x3 Matrizen, die auch als filter kernel bezeichnet werden) gefaltet werden. Dabei wird der filter kernel Zeile für Zeile für die jeweilige Eingangsmatrix verschoben. Die Eingangswerte eines jeweiligen Knotens einer der Faltungschicht nachfolgenden (Faltungs-) Schicht werden somit mittels einer diskreten Faltung ermittelt. Die Eingangswerte eines Knotens in der Faltungsschicht berechnen sich als inneres Produkt der Faltungsmatrix (filter kernel) mit den in einem jeweiligen Schritt aktuell zugeordneten Werten der Eingangsmatrix. Die vergleichsweise kleine Faltungsmatrix wird hierbei quasi schrittweise über die relativ größere Eingangswertematrix bewegt und jeweils das innere Produkt gebildet. Dies ist recht anschaulich in https://de.wikipedia.org/wiki/Convolutional Neural Network dargestellt. Nachdem eine entsprechende Eingangsmatrix weit genug reduziert ist, können deren Werte von einem in den nachfolgenden Ebenen voll vernetzten (fully connected) künstlichen neuronalen Netzwerk (ähnlich wie in einem Perceptron) weiterverarbeitet werden, um beispielsweise die durch die Eingangsmatrizen repräsentierten Bilder klassifizieren zu können.

Im Falle eines auf einem neuronalen Netz basierenden Regressors kann dieser dazu trainiert sein, beispielsweise zu einem ein Bild repräsentierenden Eingangsdatensatz eine Zahl auszugeben, die beispielsweise das Alter der Person repräsentiert, von der das Bild stammt

Auch in diesem Falle hängt die Qualität der Klassifikation oder der Regression davon ab, mit welchen Eingangsdatensätzen (Matrizen, beispielsweise Bildern) das entsprechende Convolutional Neural Network trainiert wurde.

Bekannte Probleme wie beispielsweise das Overfitting können dazu führen, dass ein als Klassifikator genutztes diskriminatives neuronales Netz bestimmte Eingangsdatensätze dann nicht zuverlässig klassifizieren kann, wenn die Eingangsdatensätze von den Trainingsdatensätzen zu stark abweichen. Wenn beispielsweise die für das Training verwendeten Eingangsdatensätze zu ähnlich sind oder zu wenig verschiedene Varianten desselben Objekts oder Zustands repräsentierende Eingangsdatensätze für das Training zur Verfügung stehen, kann es zu der bekannten Überanpassung (overfitting) kommen. Würde eine Klassifikatoreinheit für das Objekt "Rose" beispielsweise nur mit Fotos von roten Rosen trainiert werden, ist es gut möglich, dass eine solche Klassifikatoreinheit für Fotos von weißen Rosen nur einen geringen Zugehörigkeitswert ermittelt, obwohl weiße Rosen genauso Rosen sind, wie rote Rosen.

Ziel der Erfindung ist es, eine Möglichkeit zu schaffen, die Zuverlässigkeit eines künstlichen neuronalen Netzes hinsichtlich verschiedener in der Praxis vorkommender Eingangsdatensätze zu ermitteln, um angeben zu können, unter welchen Voraussetzungen beispielsweise ein Klassifikator zuverlässige Klassifizierungen erwarten lässt und unter welchen Voraussetzungen eine Klassifizierung durch den Klassifikator möglicherweise unzutreffend ist.

Eingangsdatensätze können beispielsweise Bilder, Tomografien oder dreidimensionale Modelle repräsentieren, die mit bildgebenden Verfahren in der Medizintechnik gewonnen wurden. In diesem Fall können die Eingangsdatensätze sehr unterschiedlich sein, je nachdem, wie die jeweiligen Bilder aufgenommen wurden oder die Modelle erstellt wurden. Die Unterschiede können beispielsweise aus den Werten der technischen Parameter resultieren, die bei der Bilderstellung oder der Modellierung zur Anwendung kamen. Solche technischen Parameter, deren Werte die Eigenschaften der Eingangsdatensätze beeinflussen, sind bei bildgebenden oder tomografischen Verfahren beispielsweise der Kontrastumfang, der Bildabstand, die rekonstruierte Schichtdicke, das rekonstruierte Volumen oder dergleichen.

Erfindungsgemäß wird hierzu ein System vorgeschlagen, das zum einen einen Klassifikator aufweist, der von einem diskriminativen neuronalen Netz gebildet ist und der ein binäres Klassenmodell oder ein Mehrklassenmodel verwirklicht. Außerdem weist das System einen Generator auf, der von einem generativen neuronalen Netz gebildet ist. Sowohl der Klassifikator als auch der Generator sind - für eine entsprechende Klasse - mit den gleichen Trainingsdatensätzen trainiert und verkörpern daher einander entsprechende Modelle für diese Klasse.

Der Klassifikator und der Generator können räumlich voneinander getrennt sein. Insbesondere kann der Klassifikator in einer vertraulichen Umgebung betrieben werden, während der Generator dies nicht muss, da dem Generator keine vertraulichen Daten zugeführt zu werden brauchen.

Anstelle eines Klassifikators kann auch ein Regressor vorgesehen sein. In diesem Fall ist der Generator gleichfalls mit den gleichen Trainingsdatensätzen trainiert, wie der Regressor.

Ein generatives neuronales Netz (ein Generator) erzeugt aus einem zufälligen Eingangsdatensatz, beispielsweise aus einem Eingangsdatensatz, der Rauschen repräsentiert, einen künstlichen Datensatz, der ein künstliches Objekt, einen künstlichen Zustand oder ein künstliches Ereignis repräsentiert und der beispielsweise einem Eingangsdatensatz für einen Klassifikator entspricht. Beispielsweise kann ein generatives neuronales Netz (ein Generator) aus einer Matrix, die Rauschen repräsentiert, einen Datensatz generieren, der ein Bild eines Objekts repräsentiert. Dies ist dann der Fall, wenn das generative neuronale Netz mit entsprechenden Bildern des Objekts als Trainingsdatensätzen trainiert wurde. Dies gilt insbesondere für Deconvolutional Generative Networks, die entsprechende Schichten aufweisen, die eine kleine, zufällige Eingangsmatrix schrittweise zu einer größeren Ausgangsmatrix als Ausgangsdatensatz verarbeitet. Dieser repräsentiert dann z.B. ein künstlich erzeugtes Bild eines Objekts.

Ein generatives neuronales Netzwerk kann aber auch nach Art eines Perzeptrons aufgebaut sein, das von vollständig verknüpften (fully connected) Schichten gebildet ist. und eine vergleichsweise große Eingangsschicht und eine ebenso große (d.h. ebenso viele Knoten aufweisende) Ausgangsschicht und mehrere schrittweise zunächst kleiner und dann wieder größer werdende hidden layer aufweist. Ein derartiges generatives Netzwerk kann mit einem Zufallsvektor an der Eingangsschicht gespeist werden und liefert dann als Ausgangswert einen Vektor, der ein bestimmtes Objekt, einen bestimmten Zustand oder ein bestimmtes Ereignis repräsentiert.

Eine für die hier beschriebene Anwendung, insbesondere für das Bestimmen eines Gütekriteriums bevorzugte Variante eines generativen neuronalen Netzwerks ist ein Autoencoder.

Um das generative neuronale Netz - also den Generator - zu trainieren, ist eine Instanz vorgesehen, die die Abweichung eines durch den Generator repräsentierten generativen Modells von den Trainingsdatensätzen bestimmen kann, damit die Abweichungen im Rahmen des Trainings minimiert werden können. Diese Instanz kann eine Loss-Funktion sein, die beispielsweise einen Similarity Loss bestimmt. Die die Abweichung - den Loss - bestimmende Instanz kann aber auch eine Diskriminator sein, der ähnlich die die zuvor beschriebenen Klassifikatoren von einem diskriminativen neuronalen Netz gebildet ist.

Wenn ein generatives neuronales Netz als Generator in Verbindung mit einem Diskriminator, also mit einem diskriminativen neuronalen Netz, eingesetzt wird, kann der von dem Generator erzeugte Ausgangsdatensatz dem Diskriminator als Eingangsdatensatz zugeführt werden. Der Diskriminator ist dabei typischerweise mit Trainingsdatensätzen trainiert, die das Objekt repräsentieren, für das auch der Generator trainiert wurde. Damit kann der Diskriminator im Sinne eines binären Klassifikators für einen jeweiligen von dem Generator erzeugten Ausgangsdatensatz ermitteln, ob dieser Ausgangsdatensatz tatsächlich das entsprechende Objekt repräsentiert oder nicht. Eine derartige Kombination aus einem generativen neuronalen Netz und einem diskriminativen neuronalen Netz ist auch als GAN bekannt (Generative Adverserial Network) und z.B. in Andreas Wiegand *"Eine Einführung in Generative Adverserial Network (GAN)",* Seminar KI: gestern, heute, morgen Angewandte Informatik, Universität Bamberg, beschrieben.

Der Generator kann auch ein Autoencoder sein, der mit Hilfe einer Similarity Loss Funktion als die Abweichung bestimmender Instanz trainiert wurde.

Gemäß dem der Erfindung zu Grunde liegenden Gedanken dient der Generator des erfindungsgemäßen Systems dazu, zu ermitteln, für welche Eingangsdatensätze der Klassifikator sinnvolle Ausgangswerte liefern kann. Falls der Klassifikator kein binärer Klassifikator ist, sondern ein Multiklassen-Klassifikator, dessen diskriminatives künstliches neuronales Netz mehrere, unterschiedliche Klassen repräsentierende Klassifikationsmodelle verwirklicht, von denen jedes der Klassifikationsmodelle mit unterschiedlichen Trainingsdatensätzen erzeugt wurde, dann ist für jedes Klassifikationsmodell ein Generator vorgesehen, der mit den Trainingsdatensätzen für das jeweilige Klassifikationsmodell erzeugt wurde und der auch nur für das entsprechende Klassifikationsmodell Aussagen liefern kann.

Mit Hilfe des trainierten Generators kann für eine Klasse ein künstlicher, für das Klassifikationsmodel repräsentativer Datensatz erzeugt werden, der im Rahmen dieser Beschreibung auch als künstlicher Prototyp bezeichnet wird. Dies geschieht, indem dem Generator in bekannter Weise ein Eingangsdatensatz zugeführt wird, der Rauschen repräsentiert - der also von zufälligen Werten gebildet ist.

Vorzugsweise werden dem Generator verschiedene, Rauschen repräsentierende Eingangsdatensätze, zugeführt und auf diese Weise unterschiedliche Prototypen erzeugt.

Aus dem Prototyp oder den unterschiedlichen Prototypen können dann technische Eigenschaften abgeleitet werden, die von dem Klassifikator zuzuführenden, zu klassifizierenden Eingangsdatensätzen zumindest näherungsweise erfüllt sein sollten, damit der zu dem jeweiligen Eingangsdatensatz von dem Klassifikator erzeugt Zugehörigkeitswert zuverlässig ist.

Dies ist möglich, weil sowohl der Klassifikation als auch der Generator mit den gleichen Trainingsdatensätzen trainiert wurden.

Falls die zu klassifizierenden Eingangsdatensätze beispielsweise Magnetresonanztomographien oder Computer-Tomographien repräsentieren, sind diese technische Eigenschaften beispielsweise der Kontrastumfang (Range) in Hounsfield-Units, der Bildabstand oder die rekonstruierte Schichtdicke, das abgebildete Volumen etc.

Nur wenn die zu klassifizierenden Eingangsdatensätze hinsichtlich dieser technischen Eigenschaften den Trainingsdatensätzen ähnlich sind, ist ein zuverlässiges Klassifikationsergebnis - also ein zuverlässiger Zugehörigkeitswert zu erwarten.

Wenn die Trainingsdatensätze für den Klassifikator aus technischen Gründen oder aus Vertraulichkeitsgründen nicht für eine direkte Analyse zur Verfügung stehen, können die technischen Randbedingungen, die zu klassifizierende Eingangsdatensätze erfüllen müssen, damit eine zuverlässige Klassifikation möglich ist, mit Hilfe des Generators bestimmt werden, da diese technischen Eigenschaften auf dem künstlich erzeugten, für das Klassifikationsmodell repräsentativen Datensatz (dem Prototypen) abzulesen sind.

Für den Fall, dass mit Hilfe verschiedener Rauschen repräsentierender Eingangsdatensätze von dem Generator unterschiedliche Prototypen erzeugt wurden, kann mit Hilfe dieser unterschiedlichen Prototypen ein Werteraum für die Parameterwerte definiert werden, die die technischen Eigenschaften der zu klassifizierenden Eingangsdatensätze erfüllen müssen, damit der Klassifikator zuverlässige Zugehörigkeitswerte bilden kann. Parameter, deren (Parameter-) Werte relevant sind, sind beispielsweise der Kontrastumfang, der Bildabstand, die rekonstruierte Schichtdicke, das rekonstruierte Volumen oder dergleichen, die einer jeweiligen, durch einen Eingangsdatensatz repräsentierten Tomografie oder Aufnahme zugrunde liegen.

Die künstlich erzeugten Prototypen, denen verschiedene Parameterwerte zugrunde liegen, können mit Hilfe einer Loss Function und/oder einer Similarity Function und/oder einer ähnlichen Metrik darauf geprüft werden, ob der jeweilige künstlich erzeugte Prototyp (und damit die diesem zugrundeliegenden Parameterwerte) zuverlässige Klassifikationsergebnisse erwarten lassen. Die jeweilige Loss Function liefert ein Maß für die Zuverlässigkeit, mit der ein Klassifikator einen Eingangsdatensatz richtig klassifiziert. Durch Klassifizieren der mittels des generativen neuronalen Netzwerks künstlich erzeugten Prototypen und Erzeugen der zugehörigen Loss Function können geeignete künstliche Prototypen bestimmt werden, die ein zuverlässiges Klassifikationsergebnis erwarten lassen. Die den zuverlässige Klassifikationsergebnisse liefernden künstlichen Prototypen zugrundeliegenden Parameterwerte definieren einen Werteraum für die Parameterwerte der relevanten Parameter (z.B. Bildauflösung), innerhalb dessen zuverlässige Klassifikationsergebnisse zu erwarten sind.

Ein Generator, der mit zuverlässige Klassifikationsergebnisse liefernden Trainingsdatensätzen trainiert wurde, kann insbesondere auch dazu genutzt werden, auf realen Aufnahmen, Bildern oder Tomografien beruhende Eingangsdatensätze daraufhin zu überprüfen, ob die Eingangsdatensätze ein zuverlässiges Klassifikationsergebnis durch den entsprechenden Klassifikator erwarten lassen. Hierzu kann ein von dem Generator erzeugter künstlicher Prototyp mit dem jeweiligen Eingangsdatensatz mit Hilfe einer geeigneten Metrik, z. B. mit Hilfe einer Loss Function, verglichen werden. Ein geringer Loss deutet dann darauf hin, dass der Eingangsdatensatz eine zuverlässige Klassifikation durch den Generator erwarten lässt.

Das Vergleichen auf realen Daten beruhender Eingangsdatensätze mit vom Generator erzeugten künstlichen Prototypen kann dazu genutzt werden (Parameter-) Werteräume zu definieren, die Parameterwerte und Kombinationen von Parameterwerten enthalten, die zu Eingangsdatensätzen führen, die sich voraussichtlich zuverlässig klassifizieren lassen. Dazu müssen verschiedene auf realen Daten beruhende Eingangsdatensätze, denen jeweils unterschiedliche Parameterwerte zugrunde liegen, mit den künstlich erzeugten Prototypen verglichen werden, so dass die Parameterwerte und Kombinationen von Parameterwerten bestimmt werden können, die zu einem geringen Loss führen.

Ein so bestimmter Parameterraum kann dem Betreiber des Klassifikators zur Verfügung gestellt werden, so dass dieser Eingangsdaten auf ihre Güte prüfen kann, bevor eine Klassifikation durch den Klassifikator erfolgt. Nur solche Eingangsdatensätze, zu denen die Daten mit Parameterwerten und Wertekombinationen, die innerhalb des Parameterraums liegen, gewonnen wurden, erfüllen das Gütekriterium. Mit "Gewinnen von Daten mit Parameterwerten und Wertekombinationen" ist hier gemeint, dass beim Erzeugen der Daten durch eine Daten erzeugende Entität, beispielsweise einen Tomographen, Parameterwerte wie beispielsweise Auflösung, Schichtdicke etc. herrschen, die das Erzeugen der Daten und damit die erzeugten Daten beeinflussen.

Anstelle den Generator wie vorstehend skizziert unabhängig von konkret zu klassifizierenden Eingangsdatensätzen dazu zu betreiben, dass ein Parameterwerteraum gebildet werden kann, kann der Generator dem Klassifikator auch vorgeschaltet - und damit ggf. Teil einer vertraulichen Umgebung - sein.

In diesem Fall kann ein jeweils konkret durch den Klassifikator zu klassifizierender Eingangsdatensatz zunächst mit einem entsprechenden, durch den Generator erzeugten künstlichen Prototypen verglichen werden, um vor der Klassifikation eine Abschätzung in Bezug auf die Zuverlässigkeit der Klassifikation zu erhalten.

Bei dieser Lösung ist der Generator Teil der vertraulichen Umgebung.

Bei der zuvor beschriebenen Variante, bei der ein verlässliche Klassifikationsergebnisse erwarten lassender Parameterwerteraum gebildet wird, kann der Generator hingegen auch außerhalb einer vertraulichen Umgebung betrieben werden. Insbesondere können mehrere Generatoren in jeweils eigenen Containern auf einem oder mehreren Servern betrieben werden. Indem die Generatoren in (Software-) Containern, also in jeweils einem logisch abgeschlossenen Bereich eines Servers betrieben werden, können die Generatoren auch Teil eines quasi-vertraulichen Bereichs sein, in dem auch der jeweilige Klassifikator betrieben wird. Beispielsweise kann ein in einem Container betriebener Generator über eine VPN-Verbindung (VPN: Virtual Private Network) mit dem jeweiligen Klassifikator und/oder der vertraulichen Umgebung, in der der jeweilige Klassifikator betrieben wird, verbunden sein.

Für die jeweils verwendete Loss Function ist ein Maximalwert vorgeben, den eine künstlich erzeugter Prototyp nicht überschreiten darf, um als zuverlässig zu gelten.

Umgekehrt (und entsprechend) kann die Prüfung auch mittels einer Similarity Function erfolgen, die für einen jeweiligen künstlichen Prototypen ein Ähnlichkeitsmaß liefert. Für das Ähnlichkeitsmaß kann ein Mindestwert vorgeben sein, der nicht unterschritten werden darf, damit der zugehörige künstliche Prototyp als zuverlässig gilt.

Der gemäß der vorstehend zuerst skizzierten Variante ermittelte (Parameter-) Werteraum ist ein Gütekriterium, welches einer Prüfung zu klassifizierender Eingangsdatensätze zugrunde gelegt werden kann. Zu klassifizierende Eingangsdatensätze, die das Gütekriterium erfüllen, weil die durch die zu klassifizierenden Eingangsdatensätze repräsentierte Werte technischer Parameter innerhalb des Werteraums oder Wertebereichs gemäß Gütekriterium liegen, führen zum einem verlässlichen Klassifikationsergebnis.

Vorgeschlagen wird auch ein Verfahren zum Ermitteln eines Gütekriteriums für Eingangsdatensätze für einen Klassifikator mit einem diskriminativen neuronalen Netzwerk. Die Eingangsdatensätze hängen dabei von Werten technischer Parameter ab, die in den Eingangsdatensätzen repräsentiert sind und das Gütekriterium betrifft wenigstens einen Wert eines dieser technischen Parameter. Der Klassifikator ist mit Trainingsdatensätzen trainiert und verkörpert ein Klassifikationsmodell für eine Klasse.

Gemäß dem Verfahren wird zunächst ein Generator mit einem generativen neuronalen Netzwerk bereitgestellt und mit denselben Trainingsdatensätzen trainiert, mit denen der Klassifikator trainiert wurde.

Anschließend wird mittels des trainierten Generators und einem auf zufälligen Werten basierenden Eingangsdatensatz ein künstlicher Datensatz generiert, der für das von dem Klassifikator verkörperten Klassifikationsmodell repräsentativ ist und einen künstlichen Prototypen darstellt.

Aus dem künstlichen Datensatz - d.h. dem künstlichen Prototypen - werden dann Werte für durch diesen künstlichen Prototypen repräsentierte technische Parameter ermittelt.

Aus den ermittelten Werten der technischen Parameter wird ein Gütekriterium gebildet, indem aus den ermittelten Werten der technischen Parameter ein Werteraum oder Wertebereich bestimmt wird, der von den ermittelten Werten der technischen Parameter und einen vorgegebenen Toleranzbereich abhängt, wobei der Klassifikator für solche Eingangsdatensätze, die Werte technischer Parameter repräsentiert, welche innerhalb des Werteraums liegen und damit das Gütekriterium erfüllen, ein verlässliches Klassifikationsergebnis liefern.

Vorzugsweise werden für auf unterschiedlichen Werten der Parameter basierende Eingangsdatensätze und einem von dem Generator erzeugten künstlichen Prototypen jeweils eine zugehörige Loss Function gebildet und ein von der Loss Function jeweils gelieferter Ausgangswert mit einem vorgegebenen Referenzwert verglichen. Für den Fall, dass ein jeweiliger der Loss Function kleiner ist, als der vorgegebene Referenzwert, werden die dem jeweiligen Eingangsdatensatz zugrundeliegenden Parameterwerte als solche eingestuft, die ein ausreichend zuverlässiges Klassifikationsergebnis liefern. Durch Ermitteln der Ausgangswerte der Loss Function für verschiedene, auf unterschiedlichen Werten der Parameter basierende Eingangsdatensätze, und Vergleichen des jeweiligen Ausgangswerts der Loss Function mit dem vorgegebenen Referenzwert kann ein Werteraum für die Werte der Parameter gebildet werden, der ein Gütekriterium für die Parameterwerte bildet- und zwar dergestalt, dass Parameterwerte innerhalb des Werteraums das Güterkriterium erfüllen.

Alternativ kann ein trainierter Generator auch einem Klassifikator vorgeschaltet werden und dann mittels einer die Abweichungen bestimmenden Instanz (also beispielsweise einem Diskriminator oder einer Similarity Loss Funktion) für einen jeweils konkret zu klassifizierenden Eingangsdatensatz den Loss gegenüber einem von dem Generator erzeugten Prototypen bestimmt werden, um auf diese Weise noch vor der Klassifikation des Eingangsdatensatzes eine Abschätzung über die Verlässlichkeit der Klassifikation zu erhalten.

Im einfachsten Fall reicht es, wenn dem Klassifikator nicht der Generator selbst vorgeschaltet ist, sondern wenn stattdessen nur eine eine Abweichung bestimmende Instanz wie eine Diskriminator oder eine Similarity Loss Funktion in Verbindung mit einem von dem Generator erzeugten Prototypen vorgesehen sind, um für jeden konkret zu klassifizierenden Eingangsdatensatz einen Loss gegenüber dem Prototypen zu ermitteln.

Vorzugsweise repräsentieren die zu klassifizierenden Eingangsdatensätze Tomographiebilder und die technischen Parameter, deren Werte aus dem künstlich erzeugten Datensatz ermittelt werden, sind vorzugsweise der Kontrastumfang, der Bildabstand, die rekonstruierte Schichtdicke, das rekonstruierte Volumen oder eine Kombination daraus.

Ebenso ist es bevorzugt, wenn mittels des trainierten Generators und mehreren verschiedenen auf zufälligen Werten basierenden Eingangsdatensätzen mehrere künstliche Datensätze generiert werden, die für das von dem Klassifikator verkörperten Klassifikationsmodell repräsentativ sind, und aus den künstlichen Datensätzen Werte für durch diese künstlichen Datensätze repräsentierte technische Parameter ermittelt werden.

Die Erfindung soll nun anhand eines Ausführungsbeispiels mit Bezug auf die Figuren näher erläutert werden. Von den Figuren zeigt:
- Fig. 1:: ein erfindungsgemäßes System mit einem Klassifikator und einem von diesem unabhängigen Generator;
- Fig. 2:: eine Skizze zum Erläutern der Trainingsphase;
- Fig. 3:: eine Skizze einer möglichen Implementation einer Güteprüfung in einer vertraulichen Umgebung; und
- Fig. 4:: eine Skizze einer ähnlichen Implementation, wie sie in Figur 3 skizziert ist, wobei anstelle eines Klassifikators ein Regressor vorgesehen ist.

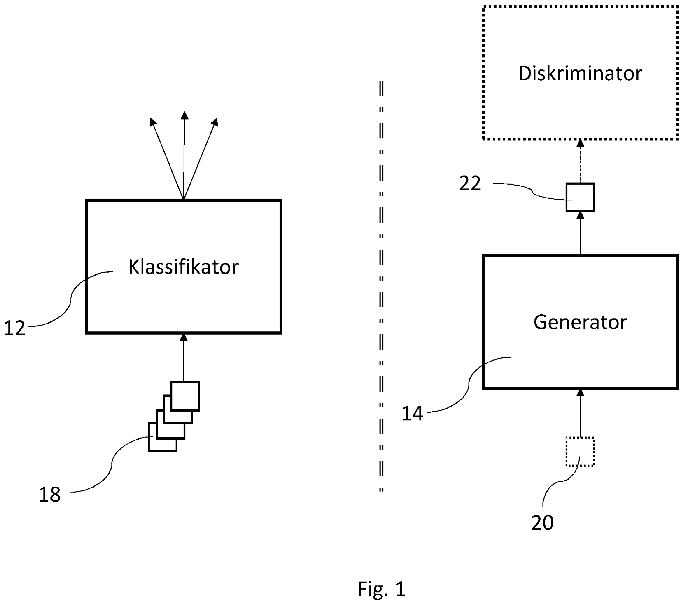

Figur 1 ist eine Skizze eines Systems 10, das zum einen einen Klassifikator 12 und zum anderen einen Generator 14 umfasst. Anstelle des Klassifikators 12 kann auch ein Regressor vorgesehen sein.

Der Klassifikator 12 wird von einem trainierten diskriminativen künstlichen neuronalen Netz gebildet, das ein Ein-Klassenmodell oder ein Mehrklassenmodell verkörpert. Entsprechend ist der Klassifikator 12 entweder ein binärer Klassifikator oder ein Multiklassen-Klassifikator. Der Klassifikator 12 ist mithilfe entsprechender Trainingsdatensätze für eine jeweilige Klasse trainiert. Wie eingangs beschrieben, hängt es von den Trainingsdatensätzen ab, wie sich der Klassifikator für die jeweilige Klasse verhält.

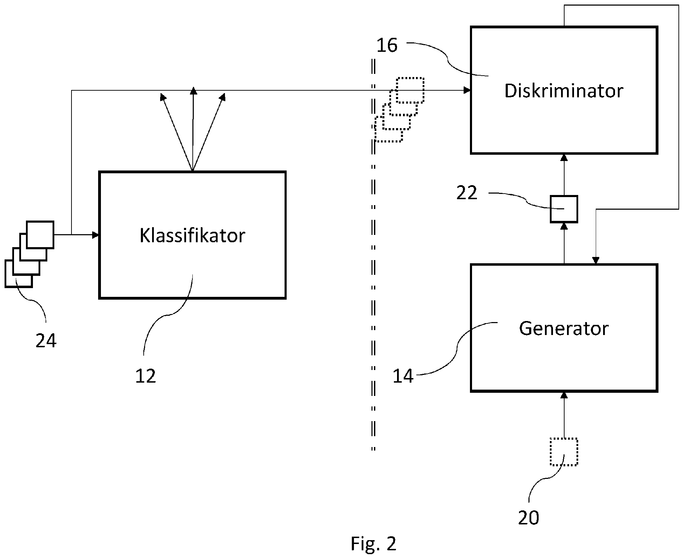

Wenn dem Klassifikator im Betrieb Eingangsdatensätze 18 zugeführt werden, die Objekte, Zustände oder Ereignisse repräsentieren, die zu klassifizieren sind, hängt das Klassifikationsergebnis davon ab, mit welchen Trainingsdatensätzen 24 der Klassifikator 12 trainiert wurde (siehe Figur 2).

Wie eingangs bereits erläutert, wird jeder Wert aus einem Eingangsdatensatz 18 im Betrieb den Knoten einer Eingangsschicht des diskriminativen neuronalen Netzes des Klassifikators 12 zugeführt. Die Ausgangswerte der Knoten der Eingangsschicht werden dann an die Knoten der nachfolgenden versteckten Schichten (hidden layer) weitergegeben bis schließlich die Knoten der Ausgangsschicht ein Signal erzeugen, das einen Zugehörigkeitswert darstellt, der angibt, wie sehr der Eingangsdatensatz - und damit das durch den Eingangsdatensatz repräsentierte Objekt, der repräsentierte Zustand oder das repräsentierte Ereignis -einer der Klassen zuzuordnen ist, für die der Klassifikator 12 trainiert wurde.

Das diskriminative künstliche neuronale Netz des Klassifikators 12 kann beispielsweise ein Perzeptron sein oder aber auch ein Convolutional Neural Network (CNN) mit einer oder mehreren Faltungsschichten am Eingang. Im Fall des Perzeptrons ist der Eingangsdatensatz typischerweise ein Vektor der eingangs beschriebenen Art. Im Fall eines Convolutional Neural Networks (CNN) ist der Eingangsdatensatz typischerweise eine Matrix, die in den meisten Fällen ein Bild repräsentiert.

Problematisch ist, dass für einen Nutzer eines Klassifikators wie dem Klassifikator 12 typischerweise nicht leicht erkennbar ist, ob er dem jeweiligen Klassifikationsergebnis - also den von dem Klassifikator gelieferten Zugehörigkeitswerten - trauen kann oder nicht. Insbesondere weiß der Nutzer nicht, für welche Eingangsdatensätzen der Klassifikator 12 absehbar zuverlässige Ergebnisse liefert und für welche Eingangsdatensätze der Klassifikator 12 absehbar keine zuverlässigen Ergebnisse liefert.

Um die Eigenschaften des Klassifikators 12 besser zu verstehen und um insbesondere die Grenzen zu ermitteln, innerhalb dessen der Klassifikator 12 zuverlässige und verlässliche Ergebnisse liefern kann, ist der Generator 14 vorgesehen. Der Generator 14 wird von einem generativen künstlichen neuronalen Netzwerk gebildet, das mit Trainingsdatensätzen für die Klasse oder eine der Klassen trainiert ist, mit denen auch der Klassifikator 12 für die entsprechende Klasse trainiert wurde. Die Trainingsdatensätze selbst stehen dem Nutzer des Generators jedoch nicht zur Verfügung, das heißt die Trainingsdatensätze, mit denen der Klassifikator 12 und auch der Generator 14 trainiert wurden, können für Außenstehende anonym bleiben. Demnach ist es nicht möglich, unmittelbar aus den Trainingsdatensätzen selbst zu schließen, unter welchen Bedingungen oder Voraussetzungen der Klassifikator 12 voraussichtlich zuverlässige Ergebnisse liefert.

Da nun aber der Generator 14 für eine Klasse mit den gleichen Trainingsdatensätzen trainiert wurde, wie der Klassifikator 12 für diese Klasse, ist es möglich mit dem Generator 14 aus einem zufälligen, typischerweise Rauschen repräsentierenden Eingangsdatensatz einen künstlichen Datensatz zu generieren. Der so generierte künstliche Datensatz stellt eine Art künstlichen Prototypen für ein Objekt, einen Zustand oder ein Ereignis dar, der die entsprechende Klasse definiert, für die auch der Klassifikator 12 trainiert ist. Durch Betrachtung des künstlichen Prototypen kann nun ermittelt werden, wie das Objekt, der Zustand oder das Ereignis aussieht, für die der Klassifikator für die entsprechende Klasse trainiert ist. Für stark von dem künstlichen Prototypen abweichende Objekte, Zustände oder Ereignisse wird der Klassifikator 12 typischerweise keinen hohen Zugehörigkeitswert für die entsprechende Klasse liefern, selbst wenn diese abweichenden Objekte, Ereignisse oder Zustände der entsprechenden Klasse zuzuordnen wären.

Hierbei ist zu beachten, dass sich abweichende Datensätze schon daraus ergeben können, wie der (Eingangs-) Datensatz generiert wurde, der ein entsprechendes Objekt, einen entsprechenden Zustand oder ein entsprechendes Ereignis repräsentiert. Das heißt die Unterschiede in den Eingangsdatensätzen hängen nicht nur von dem repräsentierten Objekt, dem repräsentierten Zustand oder dem repräsentierten Ereignis ab, sondern auch davon, wie der entsprechende Datensatz für ein solches Objekt, ein solches Ereignis oder einen solchen Zustand generiert wurde. Beispielsweise können sich die Datensätze schlicht durch die Auflösung unterscheiden, mit der ein entsprechendes Objekt, ein entsprechendes Ereignis oder ein entsprechender Zustand durch den Datensatz repräsentiert wird. Unterschiedliche Auflösungen können unter Umständen zu unterschiedlichen Klassifikationsergebnissen führen. Dies kann mithilfe des von dem Generator 14 künstlich generierten Prototypen abgeschätzt werden.

Von Vorteil ist, dass der Klassifikator oder der Regressor Teil einer vertraulichen Umgebung sein kann, beispielsweise in einem Krankenhaus mit vertraulichen Patientendaten, während der Generator dies nicht zu sein braucht, weil er mit anonymisierten Trainingsdatensätzen trainiert werden kann (und zwar den gleichen, mit denen auch der Klassifikator oder der Regressor trainiert wurde) und im Ergebnis ein Güterkriterium liefern kann, das dann in der vertraulichen Umgebung im Umfeld des Klassifikators oder Regressors zum Prüfen realer Eingangsdatensätze angewandt werden kann.

Figur 2 illustriert, dass der Klassifikator 12 (der Regressor) und der Generator 14 mit den gleichen Trainingsdatensätzen trainiert wurden. Die Trainingsdatensätze selbst sind dabei für den Betreiber des Generators 14 unsichtbar, so dass auch insofern Vertraulichkeit gewahrt werden kann.

In dem in Figur 2 dargestellten Beispiel wird der Generator von einem sogenannten Generative Adverserial Network (GAN) gebildet, das von einem eigentlichen Generator 14 und einem zugehörigen Diskriminator 16 gebildet ist. Zum Training des Generators 14 mit den Trainingsdatensätzen, die dem Diskriminator 16 zugeführt werden, erzeugt der Generator 14 aus einem Rauschen repräsentierenden Eingangsdatensatz 20 jeweils einen künstlichen Datensatz und damit einen künstlichen Prototyp repräsentierenden Datensatz 22, der dem Diskriminator 16 als Eingangsdatensatz zugeführt wird. Der Diskriminator 16 kann die Abweichung zwischen dem künstlichen Prototypen und dem durch die Trainingsdatensätze definierten Modell - den sogenannten Loss - bestimmen und ein diese Abweichung repräsentierendes Ausgangssignal bilden. Dass den Loss repräsentierende Ausgangssignal des Diskriminators 16 wird dem Generator 14 zurückgeführt und bewirkt dort eine Anpassung der Gewichte der Knoten der Schichten des Generators 14. Das geschieht solange, bis die Abweichung zwischen dem künstlichen Prototypen 22 und dem durch die Trainingsdatensätze 24 repräsentierten Modell hinreichend klein ist. Sobald dies der Fall ist, ist der Generator 14 für die entsprechende Klasse trainiert und führt die im Zusammenhang mit Figur 1 beschriebene Analyse wird der Diskriminator 16 nicht mehr benötigt.

Der Generator 14 kann dann wie folgt verwendet werden, um ein Gütekriterium für zu klassifizierende Eingangsdatensätze für den Klassifikator zu ermitteln:
Zunächst wird ein Generator mit einem generativen neuronalen Netzwerk bereitgestellt und mit denselben Trainingsdatensätzen trainiert, mit denen der Klassifikator trainiert wurde.

Anschließend wird mittels des trainierten Generators und einem auf zufälligen Werten basierenden Eingangsdatensatz ein künstlicher Datensatz generiert, der für das von dem Klassifikator verkörperten Klassifikationsmodell repräsentativ ist und der im Rahmen dieser Beschreibung auch als künstlicher Prototyp bezeichnet wird.

Gemäß einem ersten Ansatz werden aus dem künstlichen Datensatz Werte für durch diesen künstlichen Datensatz repräsentierte technische Parameter ermittelt.

Aus den ermittelten Werten der technischen Parameter wird ein Gütekriterium gebildet, indem aus den ermittelten Werten der technischen Parameter ein Werteraum oder Wertebereich bestimmt wird, der von den ermittelten Werten der technischen Parameter und einen vorgegebenen Toleranzbereich abhängt, wobei der Klassifikator für solche Eingangsdatensätze, die Werte technischer Parameter repräsentieren, welche innerhalb des Werteraums liegen und damit das Gütekriterium erfüllen, ein verlässliches Klassifikationsergebnis liefert.

Alternativ kann der als Güterkriterium dienende Wertebereich oder Werteraum auch dadurch ermittelte werden, dass ein von dem Generator künstlich erzeugter Datensatz (also ein künstlicher Prototyp) mit verschiedenen, auf realen Daten basierenden Eingangsdatensätzen verglichen wird. Hierzu werden Eingangsdatensätze verwendet, denen unterschiedliche Parameterwerte für die relevanten Parameter wie z. B. Auflösung, Schichtdicke oder dergleichen zugrunde liegen. Für jeden Eingangsdatensatz wird der Loss gegenüber dem künstlichen Prototypen oder die Ähnlichkeit zu dem künstlichen Prototypen ermittelt, und zwar mittels einer an sich bekannten Loss-Funktion (Loss Function) oder einer ebenfalls an sich bekannten Ähnlichkeitsfunktion (Similarity Function). Wenn der Vergleich ergibt, dass der Loss gering bzw. die Ähnlichkeit groß genug ist, werden die dem jeweiligen Eingangsdatensatz zugrundeliegenden Parameterwerte dem Parameterraum zugeordnet, der für eine ausreichende Güte steht.

Auch auf diese alternative Weise kann mit Hilfe des Generators ein Parameterraum gebildet werden, der als Gütekriterium für durch den Klassifikator zu klassifizierende Eingangsdatensätze dienen kann - und zwar in dem Sinne, dass Eingangsdatenätze, die auf Daten beruhen, bei deren Gewinnung Parameterwerte aus dem als Gütekriterium dienenden Parameterraum stammen, das Gütekriterium erfüllen und eine verlässliche Klassifikation erwarten lassen.

Gemäß einer dritten Variante ist der Generator dem Klassifikator vorgeschaltet - und damit Teil einer ggf. vertraulichen Umgebung. Dann kann für einen jeweils konkret zu klassifizierenden Eingangsdatensatz der Loss gegenüber einem von dem Generator erzeugten Prototypen bestimmt werden, um auf diese Weise noch vor der Klassifikation des Eingangsdatensatzes eine Abschätzung über die Verlässlichkeit der Klassifikation zu erhalten.

Wie eingangs erwähnt, reicht es im einfachsten Fall, wenn dem Klassifikator (oder dem Regressor) nicht der Generator selbst vorgeschaltet ist, sondern wenn stattdessen nur eine eine Abweichung bestimmende Instanz wie ein Diskriminator oder eine Similarity Loss Funktion in Verbindung mit einem von dem Generator erzeugten Prototypen vorgesehen sind, um für jeden konkret zu klassifizierenden Eingangsdatensatz einen Loss gegenüber dem Prototypen zu ermitteln.

Vorzugsweise repräsentieren die zu klassifizierenden Eingangsdatensätze Tomographiebilder und die technischen Parameter, deren Werte aus dem künstlich erzeugten Datensatz ermittelt werden, sind vorzugsweise der Kontrastumfang, der Bildabstand, die rekonstruierte Schichtdicke, das rekonstruierte Volumen oder eine Kombination daraus.

Ebenso ist es bevorzugt, wenn mittels des trainierten Generators und mehreren verschiedenen auf zufälligen Werten basierenden Eingangsdatensätzen mehrere künstliche Datensätze generiert werden, die für das von dem Klassifikator verkörperten Klassifikationsmodell repräsentativ sind, und aus den künstlichen Datensätzen Werte für durch diese künstlichen Datensätze repräsentierte technische Parameter ermittelt werden.

Mit Hilfe des Verfahrens und des Systems wird das Problem gelöst, dass ein Betreiber eines Klassifikators nur schwer erkennen kann, ob er sich auf von dem Klassifikator gewonnene Klassifikationsergebnisse - also von dem Klassifikator generierte Zugehörigkeitswerte - verlassen. Letzteres ist nämlich nur der Fall, wenn die zu klassifizierenden Eingangsdatensätze für den Klassifikator technische Kriterien erfüllen, die zu dem Klassifikationsmodell passen, das durch den Klassifikator verkörpert wird. Solche technischen Kriterien sind die Wertebereiche der technischen Parameter, die durch den jeweiligen Eingangsdatensatz repräsentiert sind. Nur wenn diese zu dem Klassifikationsmodell passen, ist die Klassifikation durch den Klassifikator verlässlich.

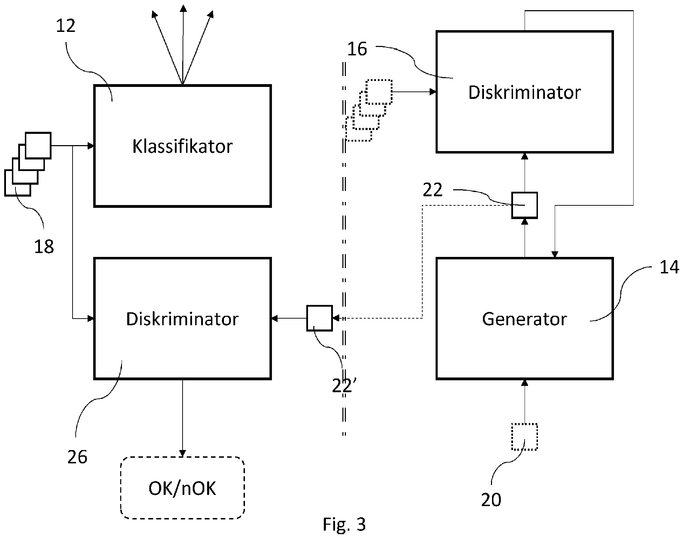

Wie bereits zuvor erwähnt, kann eine Güteprüfung zu klassifizierender Eingangsdatensätze 18 auch dadurch erfolgen, dass der Klassifikator 12 in der vertraulichen Umgebung in Verbindung mit einem (zweiten) Diskriminator 26 betrieben wird. Figur 3 illustriert eine entsprechende Anordnung. Auf der linken Seite in Figur 3 ist die vertrauliche Umgebung mit dem Klassifikator 12 und dem (zweiten) Diskriminator 26 dargestellt. Der zweite Diskriminator 26 dient zum Ermitteln einer Loss-Funktion, also zum Ermitteln eines Maßes einer (gemittelten) Abweichung zwischen einem von dem Generator 14 erzeugten künstlichen Prototypen 22' und einem jeweils zu klassifizierenden Eingangsdatensatz 18. Der künstliche Prototyp 22' kann in der nicht vertraulichen Umgebung von dem Generator 14 erzeugt werden und dann für die Güteprüfung in der vertraulichen Umgebung zur Verfügung gestellt werden. Tatsächlich kann der zweite Diskriminator 26 auch als ein mit dem künstlichen Prototypen 22' trainierter Klassifikator betrachtet werden, der für jeden zu klassifizierenden Eingangsdatensatz 18 eine Zugehörigkeit zu einer Klasse *"für eine zuverlässige Klassifikation geeignet (O.K.)"* oder zu einer Klasse *"für eine zuverlässige Klassifikation nicht geeignet (n.O.K.)"* bestimmt. Der zweite Diskriminator 26 kann somit als binärer Klassifikator ausgebildet sein. Der eigentliche Klassifikator 12 ist hingegen typischerweise ein Multiklassen-Klassifikator und klassifiziert die Eingangsdatensätze 18, indem jeder Eingangsdatensatz 18 einer von mehreren Klassen zugeordnet wird, für die der Klassifikator 12 trainiert wurde.

In dem in Figur 3 abgebildeten Ausführungsbeispiel ist der Diskriminator 26 eine Instanz, die die Abweichung zwischen dem künstlich erzeugten Prototypen 22' und einem jeweils zu klassifizierenden Eingangsdatensatz 18 prüft. Der Diskriminator 26 kann somit auch eine einfache Similarity-Loss-Funktion verkörpern.

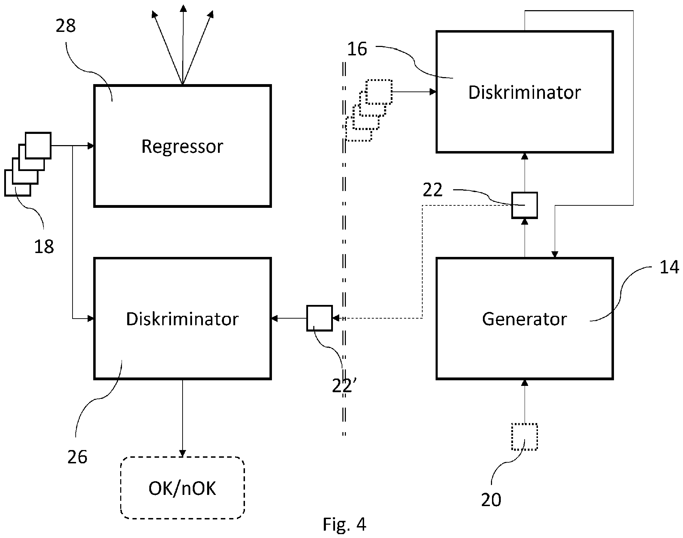

Wie ebenfalls zuvor erwähnt, kann in der vertraulichen Umgebung anstelle eines Klassifikators 12 auch ein Regressor 28 vorgesehen sein. Dies ist in Figur 4 veranschaulicht. Ein Regressor liefert typischerweise als Ausgangswert keine Zuordnung zu einer von mehreren Klassen (sowie das der Klassifikator 12 tut), sondern liefert einen Zahlenwert zu einem jeweiligen Eingangsdatensatz. Beispielsweise kann der Zahlenwert das Alter einer Person repräsentieren, wenn der von dem Regressor 28 geprüfte Eingangsdatensatz ein Bild dieser Person repräsentiert. Andere von einem Regressor gelieferte Zahlenwerte können beispielsweise die wahrscheinliche Aufenthaltsdauer eines Patienten im Krankenhaus angeben. Auch der Regressor 28 verkörpert ein diskriminatives neuronales Netz, das mit entsprechenden Trainingsdatensätzen trainiert wurde, die beispielsweise Bilder von Personen verschiedenen Alters repräsentieren.

### Bezugszeichen

- 12: Klassifikator
- 14: Generator
- 16: Diskriminator
- 18: Eingangsdatensätze für zu klassifizierende Objekte
- 20: Eingangsdatensatz
- 22, 22': Künstlicher Prototyp
- 24: Trainingsdatensätze
- 26: Diskriminator in der vertraulichen Umgebung
- 28: Regressor

## Patentansprüche

1. System zum Prüfen eines für eine Klasse trainierten Klassifikators (12) mittels eines modellbasierten Generators (14), umfassend wenigstens einen approximierten/trainierten Klassifikator (12) oder Regressor (28) mit einem diskriminativen neuronalen Netz an einem ersten Ort und wenigstens einen modellbasierten Sample-Generator (14) mit einem generativen neuronalen Netz an einem von dem ersten Ort entfernten zweiten Ort, wobei das generative neuronale Netz des Generators (14) mit den gleichen Trainingsdatensätzen (24) wie das diskriminative neuronale Netz des Klassifikators (12) oder Regressors (30) trainiert ist und dazu ausgebildet ist, aus einen zufällige Werte repräsentierenden Eingangsdatensatz (20) einen künstlichen Ausgangsdatensatz (22) zu generieren, der einen Prototyp für ein die Klasse, für die der Klassifikator (12) oder der Regressor (28) trainiert ist, repräsentiertes Modell darstellt.

2. System gemäß Anspruch 1, bei dem der Klassifikator (12) oder der Regressor (28) Teil einer vertraulichen Umgebung ist und der Diskriminator (14) in einem Software-Container verwirklicht ist und über eine VPN Verbindung mit dem Klassifikator (12) oder dem Regressor (28) verbunden ist.

3. Verfahren zum Ermitteln eines Gütekriteriums für Eingangsdatensätze (18) für einen Klassifikator (12) oder einen Regressor (28) mit einem diskriminativen neuronalen Netzwerk, wobei die Eingangsdatensätze (18) von Werten technischer Parameter abhängen, die in den Eingangsdatensätzen (18) repräsentiert sind und das Gütekriterium wenigstens einen Wert eines dieser technischen Parameter betrifft, und wobei der Klassifikator (12) oder der Regressor (28) mit Trainingsdatensätzen (24) trainiert ist und ein Klassifikationsmodell für eine Klasse bzw. ein Regressionsmodell verkörpert, **dadurch gekennzeichnet,**
**dass** ein Generator (14) mit einem generativen neuronalen Netzwerk mit denselben Trainingsdatensätzen (24) trainiert wird, mit denen der Klassifikator (12) oder der Regressor (28) trainiert wurde,
**dass** mittels des trainierten Generators (14) und einem auf zufälligen Werten basierenden Eingangsdatensatz (20) anschließend ein künstlicher Datensatz (22) generiert wird, der für das von dem Klassifikator (12) verkörperten Klassifikationsmodell oder das von dem Regressor (28) repräsentiere Regressionsmodell repräsentativ ist,
**dass** aus dem künstlichen Datensatz (22) Werte für durch diesen künstlichen Datensatz repräsentierte technische Parameter ermittelt werden und
**dass** aus den ermittelten Werten der technischen Parameter ein Gütekriterium derart gebildet wird, dass aus den ermittelten Werten der technischen Parameter ein Werteraum bestimmt wird, der von den ermittelten Werten der technischen Parameter und einem vorgegebenen Toleranzbereich abhängt, wobei der Klassifikator (12) oder der Regressor (28) für solche Eingangsdatensätze (18), die Werte technischer Parameter repräsentieren, welche innerhalb des Werteraums liegen und damit das Gütekriterium erfüllen, ein verlässliches Klassifikationsergebnis bzw. Regressionsergebnis liefert.

4. Verfahren zum Ermitteln eines Gütekriteriums für Eingangsdatensätze (18) für einen Klassifikator (12) oder einen Regressor (28) mit einem diskriminativen neuronalen Netzwerk, wobei die Eingangsdatensätze (18) von Werten technischer Parameter abhängen, die in den Eingangsdatensätzen (18) repräsentiert sind und das Gütekriterium wenigstens einen Wert eines dieser technischen Parameter betrifft, und wobei der Klassifikator (12) oder der Regressor (28) mit Trainingsdatensätzen (24) trainiert ist und ein Klassifikationsmodell für eine Klasse bzw. ein Regressionsmodell verkörpert, **dadurch gekennzeichnet,**
**dass** ein Generator (14) mit einem generativen neuronalen Netzwerk mit denselben Trainingsdatensätzen (24) trainiert wird, mit denen der Klassifikator (12) oder der Regressor (28) trainiert wurde,
**dass** mittels des trainierten Generators (14) und einem auf zufälligen Werten basierenden Eingangsdatensatz (20) anschließend ein künstlicher Datensatz (22) generiert wird, der für das von dem Klassifikator (12) verkörperte Klassifikationsmodell oder das von dem Regressor (28) verkörperte Regressionsmodell repräsentativ ist,
**dass** der künstliche Datensatz (22) mit verschiedenen, aus realen Daten basierenden Eingangsdatensätzen (18) verglichen wird, denen unterschiedliche Parameterwerte zugrunde liegen, indem für jeden Eingangsdatensatz (18) der Loss gegenüber dem künstlichen Datensatz (22) oder die Ähnlichkeit mit dem künstlichen Datensatz (22) ermittelt wird, und, wenn der Vergleich ergibt, dass der Loss gering bzw. die Ähnlichkeit groß genug ist, die dem jeweiligen Eingangsdatensatz (18) zugrundeliegenden Parameterwerte dem Parameterraum zugeordnet werden.

5. Verfahren zum Prüfen von Eingangsdatensätzen für einen Klassifikator (12) oder einen Regressor (28) mit einem diskriminativen neuronalen Netzwerk, wobei die Eingangsdatensätze (18) von Werten technischer Parameter abhängen, die in den Eingangsdatensätzen (18) repräsentiert sind und das Gütekriterium wenigstens einen Wert eines dieser technischen Parameter betrifft, und wobei der Klassifikator (12) oder der Regressor (28) mit Trainingsdatensätzen (24) trainiert ist und ein Klassifikationsmodell für eine Klasse bzw. ein Regressionsmodell verkörpert, **dadurch gekennzeichnet,**
**dass** ein Generator (14) mit einem generativen neuronalen Netzwerk mit denselben Trainingsdatensätzen (24) trainiert wird, mit denen der Klassifikator (12) oder der Regressor (28) trainiert wurde,
**dass** mittels des trainierten Generators (14) und einem auf zufälligen Werten basierenden Eingangsdatensatz (20) anschließend ein künstlicher Datensatz (22) generiert wird, der für das von dem Klassifikator verkörperte Klassifikationsmodell oder das von dem Regressor verkörperte Regressionsmodell repräsentativ ist,
wobei der Generator (14) dem Klassifikator (12) oder dem Regressor (28) vorgeschaltet ist und für einen jeweils konkret durch den Klassifikator (12) oder den Regressor (28) zu verarbeitenden Eingangsdatensatz (18) der Loss gegenüber einem von dem Generator (14) erzeugten künstlichen Datensatz (22) bestimmt wird, um auf diese Weise noch vor der Klassifikation des Eingangsdatensatzes (18) eine Abschätzung über die Verlässlichkeit der Klassifikation zu erhalten.

6. Verfahren gemäß Anspruch 3, 4 oder 5, **dadurch gekennzeichnet, dass** die zu klassifizierenden Eingangsdatensätze (18) Tomographiebilder repräsentieren und die technischen Parameter, deren Werte aus dem künstlich erzeugten Datensatz ermittelt werden, der Kontrastumfang, der Bildabstand, die rekonstruierte Schichtdicke, das rekonstruierte Volumen oder eine Kombination daraus sind.

7. Verfahren gemäß Anspruch 3, 4, 5 oder 6, **dadurch gekennzeichnet, dass** mittels des trainierten Generators (14) und mehreren verschiedenen auf zufälligen Werten basierenden Eingangsdatensätzen mehrere künstliche Datensätze (22) generiert werden, die für das von dem Klassifikator (12) verkörperten Klassifikationsmodell oder das von dem Regressor (28) verkörperte Regressionsmodell repräsentativ sind, und
dass aus den künstlichen Datensätzen (22) Werte für durch diese künstlichen Datensätze (22) repräsentierte technische Parameter ermittelt werden.
